(19) Europäisches Patentamt
European Patent Office
Office européen des brevets

(11) **EP 2 800 983 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(51) Int Cl.:
**G01S 15/10** *(2006.01)*      **G01S 15/93** *(2006.01)*
**G01S 7/526** *(2006.01)*

(21) Anmeldenummer: **12801493.3**

(22) Anmeldetag: **26.11.2012**

(86) Internationale Anmeldenummer:
**PCT/EP2012/073581**

(87) Internationale Veröffentlichungsnummer:
**WO 2013/102515 (11.07.2013 Gazette 2013/28)**

(54) **VERFAHREN UND UMFELDERFASSUNGSVORRICHTUNG ZUR BESTIMMUNG DER POSITION VON MINDESTENS EINEM OBJEKT IN DER UMGEBUNG EINES BEWEGUNGSHILFSMITTELS MITTELS MINDESTENS EINES AKUSTISCHEN PULSES**

METHOD AND SURROUNDINGS DETECTION DEVICE FOR DETERMINING THE POSITION OF AT LEAST ONE OBJECT IN THE SURROUNDINGS OF A MOBILITY AID USING AT LEAST ONE ACOUSTIC PULSE

PROCÉDÉ ET DISPOSITIF DE DÉTECTION DE L'ENVIRONNEMENT POUR DÉTERMINER LA POSITION D'AU MOINS UN OBJET SITUÉ DANS L'ENVIRONNEMENT D'UN MOYEN D'AIDE AU DÉPLACEMENT AU MOYEN D'AU MOINS UNE IMPULSION ACOUSTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.01.2012 DE 102012200024**

(43) Veröffentlichungstag der Anmeldung:
**12.11.2014 Patentblatt 2014/46**

(73) Patentinhaber: **Robert Bosch GmbH**
**70442 Stuttgart (DE)**

(72) Erfinder: **Karl, Matthias**
**76275 Ettlingen (DE)**

(56) Entgegenhaltungen:
**WO-A2-02/12917      US-A- 5 631 875**
**US-A1- 2011 259 106**

EP 2 800 983 B1

**Beschreibung**

Bereich der Erfindung

Die vorliegende Erfindung betrifft ein Verfahren und eine Umfelderfassungsvorrichtung zur Bestimmung der Position und/oder der Bewegung von mindestens einem Objekt in der Umgebung eines Bewegungshilfsmittels mittels ausgesendeten und an dem Objekt reflektierten akustischen Pulsen mit einer vorgegebenen Pulsdauer. Auch betrifft die Erfindung ein Fahrzeug mit einer erfindungsgemäßen Umfelderfassungsvorrichtung.

Stand der Technik

Zur akustischen Umfelderfassung von Fahrzeugen werden derzeit üblicherweise pulsweise messende Ultraschallsysteme verwendet, bei denen ab dem Sendebeginn kurze, mit Signalpulsen von $\Delta\tau_p$ = 0,3 ms modulierte, sinusförmige Trägersignale von typischerweise 48 kHz ausgesandt werden. Anhand der Laufzeit der Reflexe dieser Pulse an Objekten der Umgebung wird mittels der Schallgeschwindigkeit $c$ der Abstand zu den Objekten bestimmt.

Insbesondere bei den heute zumeist verwendeten Sensoren mit abgesetzter Signalentscheidung wird der Zeitverlauf der Echoamplitude anhand mindestens eines laufzeitabhängigen Schwellwertes, der auch als Kennlinie bezeichnet wird, bewertet und die Zeit zwischen dem Beginn des Aussendens $t_S$ und dem Beginn der Überschreitung des Schwellwertes $t_E$ durch den Zeitverlauf der Echoamplitude als Echolaufzeit $\tau_{Oalt}$ = $t_E$ - $t_S$ gewertet.

Die auf diese Weise bestimmten Echolaufzeiten weisen jedoch relativ hohe Schwankungen auf, sodass eine Objektortung durch Trilateration anhand der Echolaufzeit stark insbesondere lateral streut.

In einer erweiterten Ausführungsform eines aus dem Stand der Technik bekannten Ultraschallsystems wird mittels einer Funktion, die beispielsweise Diskriminatorfenster genannt wird, geprüft, ob die Echoamplitude den Schwellwert für eine längere Zeit, die sogenannte Diskriminatorzeit, überschreitet, bevor die Echolaufzeit bestimmt wird. Das durch dieses Diskriminatorfenster verzögerte Durchschaltsignal ist auf der Schnittstelle zwischen abgesetzter Signalentscheidung und Signalauswertung zwar messbar, wird aber bei der Rechnung in der Signalauswertung kompensiert. Daher hat das Diskriminatorfenster effektiv keinen Einfluss auf die Signalentscheidung und sei hier nur der Vollständigkeit halber erwähnt.

Aus dem Dokument DE 10 2009 002 870 A1 sind ein Ultraschallobjekt-Erfassungssystem und ein Verfahren zur Erfassung von Objekten mit Hilfe von Ultraschall bekannt, wobei es erwähnt ist, dass derzeitige Übertragungssysteme nur auf den Beginn eines Empfangsechos reagieren und nicht die Impulsdauer beim Echoempfang auswerten. Das beschriebene System und Verfahren bezieht sich darauf, Ultraschallimpulse unterschiedlicher Impulsdauer und Impulsstärke auszusenden, um verschieden weit vom Sensorsystem entfernte Teilbereiche zu überwachen.

Das Dokument DE 30 37 139 C2 beschreibt ein Ultraschall-Laufzeit-Entfernungsmessverfahren und eine Schaltungsanordnung zur Durchführung des Verfahrens, wobei anhand eines Tests mit einer durchschnittlichen Zeitdauer von 0,6 ms ermittelt wird, ob es sich bei einem empfangenen Echopuls um einen wahren Echopuls handelt. Es ist beschrieben, dass das Entfernungsmesssignal, welches erst nach dem Test ausgegeben wird, eine um 0,6 ms kürzere Laufzeit als ohne den Test aufweist, wodurch ein Messfehler von etwa 15 cm erzeugt wird, der kompensiert werden kann.

Aus dem Dokument US 2011/259106 A1 ist ein Verfahren zur Bestimmung der Position und/oder der Bewegung mindestens eines Objekt mittels mindestens eines ausgesendeten und an dem Objekt reflektierten akustischen Pulses. Der ausgesendete und an dem Objekt reflektierte akustische Puls wird als Echopuls bezeichnet. Dabei wird zur Bestimmung der Position des Objektes der Zeitpunkt, an dem das Maximum der Amplitude des empfangenen Echopulses auftritt, ermittelt. Die Ermittlung des Zeitpunktes, an dem das Maximum der Amplitude des empfangenen Echopulses auftritt, basiert beispielsweise auf der Ermittlung eines ersten Zeitpunktes, an dem die Amplitude des empfangenen Echos einen Schwellenwert überschreitet, und eines zweiten Zeitpunktes, an dem die Amplitude des empfangenen Echos denselben Schwellenwert unterschreitet. Dabei wird der Zeitpunkt, an dem das Maximum der Amplitude des empfangenen Echopulses auftritt, beispielsweise durch den in der Mitte zwischen dem ersten und dem zweiten Zeitpunkt liegenden Zeitpunkt angenähert.

Aus dem Dokument WO 02/12917 A2 ist ein Verfahren zum Detektieren von ausgesendeten und an einem Objekt reflektierten akustischen Pulsen, die als Echopulse bezeichnet werden, bekannt. Dabei werden die akustischen Pulse mittels desselben Schallwandlers ausgesendet, mittels dessen die Echopulse auch empfangen werden. Zum Trennen der empfangenen Echopulse von den infolge des Aussendens der akustischen Pulse erzeugten Nachschwingungssignalen, wird die Zeit des Überschreitens eines geeignet definierten Schwellenwertes durch die Amplitude des von dem Schallwandler erzeugten elektrischen Signals gemessen. Wenn die so gemessene Zeitdauer eine vorbestimmte Zeitdauer überschreitet, wird das gemessene Signal als Signal, das aus einem tatsächlich empfangenen Echopuls erzeugt worden ist, identifiziert und somit der empfangene Echopuls detektiert.

Aus dem Dokument US 5 631 875 A ist eine Vorrichtung zur Bestimmung der Position eines Objektes mittels eines ausgesendeten und an dem Objekt reflektierten akustischen Pulses, der als Echopuls bezeichnet wird, bekannt.

Dabei ist die Vorrichtung dazu ausgebildet, die Echopulslaufzeit eines empfangenen Echopulses anhand des Zeitpunktes des ersten Überschreitens eines variabel einstellbaren Schwellwertes durch die Amplitude des empfangenen Echopulses zu bestimmen. Ferner ist die Vorrichtung dazu ausgebildet, den Schwellenwert in Abhängigkeit von der Dauer des Überschreitens des Schwellwertes durch die Amplitude von vorherig empfangenen Echopulsen zu variieren.

Offenbarung der Erfindung

Erfindungsgemäß wird ein Verfahren zur Bestimmung der Position von mindestens einem Objekt in der Umgebung eines Bewegungshilfsmittels mittels mindestens eines ausgesendeten und an dem Objekt reflektierten akustischen Pulses mit einer vorgegebenen Pulsdauer bereitgestellt. Dabei wird der am Objekt reflektierte akustische Puls als Echopuls bezeichnet. Ferner wird die Echopulslaufzeit des Echopulses und damit auch die Position des Objektes anhand des Zeitpunktes des ersten oder des letzten Überschreitens mindestens eines vordefinierten Schwellwertes durch die Amplitude des empfangenen Echopulses und der Dauer des Überschreitens des Schwellwertes bestimmt. Ferner wird zur Berechnung der Echopulslaufzeit, die Hälfte der Dauer des Überschreitens des Schwellwertes zu dem Zeitpunkt des ersten Überschreitens hinzuaddiert oder von dem Zeitpunkt des letzten Überschreitens subtrahiert. Zu dem dadurch erhaltenen nichtkorrigierten Ausdruck der Echopulslaufzeit wird ein als Differenz zwischen der Dauer der Impulsantwort eines Empfangsfilters für den Echopuls und der Pulsdauer des gesendeten Pulses errechneter Korrekturfaktor subtrahiert.

Weiterhin wird erfindungsgemäß eine Umfelderfassungsvorrichtung zur Bestimmung der Position von mindestens einem Objekt in der Umgebung eines Bewegungshilfsmittels mittels mindestens eines ausgesendeten und an dem Objekt reflektierten akustischen Pulses mit einer vorgegebenen Pulsdauer bereitgestellt. Dabei ist der am Objekt reflektierte akustische Puls als Echopuls bezeichnet. Ferner ist die Umfelderfassungsvorrichtung dazu ausgebildet, die Echopulslaufzeit und damit auch die Position des Objektes anhand des Zeitpunktes des ersten oder des letzten Überschreitens mindestens eines vordefinierten Schwellwertes durch die Amplitude des empfangenen Echopulses und der Dauer des Überschreitens des Schwellwertes zu bestimmen. Ferner ist die Umfelderfassungsvorrichtung dazu ausgebildet, zur Berechnung der Echopulslaufzeit die Hälfte der Dauer des Überschreitens des Schwellwertes zu dem Zeitpunkt des ersten Überschreitens hinzuzuaddieren oder von dem Zeitpunkt des letzten Überschreitens zu subtrahieren und zu dem dadurch erhaltenen nichtkorrigierten Ausdruck der Echopulslaufzeit einen als Differenz zwischen der Dauer der Impulsantwort eines Empfangsfilters für den Echopuls und der Pulsdauer des gesendeten Pulses berechneten Korrekturfaktor zu subtrahieren.

Die Unteransprüche zeigen bevorzugte Weiterbildungen der Erfindung.

Bei dem erfindungsgemäße Verfahren wird die Position und/oder Bewegung von Objekten in der Umgebung von Bewegungshilfsmitteln wie insbesondere Krankenfahrstühlen, Segways, Fahrrädern, Elektroautos, anderen Fahrzeugen wie Autos, Bussen und Lastkraftwagen mittels von ausgesendeten pulsförmig modulierten akustischen Signalen mit einer vordefinierter Pulsdauer $\Delta\tau_P$ bestimmt.

Mit anderen Worten wird mittels des erfindungsgemäßen Verfahrens die Schalllaufzeit (Echopulslaufzeit) $\tau_{Oneu}$ und damit die Position des reflektierenden Objekts anhand mindestens eines Schwellwertes insbesondere durch die Berücksichtigung des Zeitpunktes $t_E$ des ersten Überschreitens des Schwellwertes und der Dauer des Überschreitens des Schwellwertes $\Delta\tau_E$ bestimmt.

Bei dem erfindungsgemäßen Verfahren wird die Echolaufzeit insbesondere anhand des Zeitpunktes des ersten Überschreitens, zu dem die Hälfte des Dauer des Überschreitens des Schwellwertes hinzuaddiert wird, berechnet oder anhand des Zeitpunktes des letzten Überschreitens, von dem die Hälfte des Dauer des Überschreitens des Schwellwertes subtrahiert wird, berechnet.

Erfindungsgemäß kann mit dem Sendebeginn $t_S$ als zeitlicher Bezugspunkt gearbeitet werden. In diesem Fall wird die Schalllaufzeit $\tau_{Oneu}$ des reflektierenden Objektes aus der Zeitdifferenz zwischen dem zeitlichen Ende des Aussendens ($t_S + \Delta\tau_P$) des Sendepulses der Dauer $\Delta\tau_P$ und dem Zeitpunkt $t_E$ des ersten Überschreitens des Schwellwertes durch die Echoamplitude und der Zeitdauer des Überschreitens des Schwellwertes durch die Echoamplitude $\Delta\tau_E$ gemäß der Relation (1) berechnet:

$$\tau_{Oneu} = t_E - (t_s + \Delta\tau_P) + 0{,}5 \cdot \Delta\tau_E \qquad\qquad (1)$$

Erfindungsgemäß kann auch mit dem Zeitpunkt $t_{EEnd}$ des letztmaligen Überschreitens des Schwellwertes durch die Echoamplitude als zeitlicher Bezugspunkt gearbeitet werden. In diesem Fall wird die Schalllaufzeit $\tau_{Oneu}$ des reflektierenden Objektes unter der Berücksichtigung des Zeitpunktes $t_{EEnd}$ des letztmaligen Überschreitens des Schwellwertes und der Zeitdauer des Überschreitens des Schwellwertes durch die Echoamplitude $\Delta\tau_E$ gemäß der Relation (2) berechnet:

3

$$\tau_{Oneu} = t_{EEnd} - (t_s + \Delta\tau_P) - 0,5 \cdot \Delta\tau_E \qquad (2)$$

Da das Verhältnis von maximaler Echoamplitude zu Schwellwert von vielerlei Einflüssen abhängt, wird deutlich, warum die heute übliche Objektlokalisierung basierend auf der Laufzeitbestimmung, die allein auf der Basis des Beginns $t_E$ beziehungsweise des Endes $t_{EEnd}$ einer Schwellwertüberschreitung durch den Zeitverlauf der Echoamplitude beruht, auch kurzfristig stark streut.

Wird hingegen zusätzlich die Dauer der Schwellwertüberschreitung durch den Zeitverlauf der Echoamplitude berücksichtigt und die Echolaufzeit gemäß der Relationen (1) und (2) insbesondere mittels eines an dem Sendepuls angepassten Empfangsfilters bestimmt, so ist das Ergebnis unabhängig von der maximalen Echoamplitude.

Bei der Erfindung wird die Echolaufzeit mittels eines Korrekturfaktors korrigiert, der aus dem nichtkorrigierten Ausdruck der Echolaufzeit subtrahiert wird.

So wird die gemäß der Relationen (1) und (2) berechnete Schalllaufzeit $\tau_{Oneu}$ erfindungsgemäß mittels eines Korrekturfaktors $\Delta\tau_{Korr}$ gemäß der Relationen (3) und (4) korrigiert:

$$\tau_{Oneu} = t_E - (t_s + \Delta\tau_P) + 0,5 \cdot \Delta\tau_E - \Delta\tau_{Korr} \qquad (3)$$

$$\tau_{Oneu} = t_{EEnd} - (t_s + \Delta\tau_P) - 0,5 \cdot \Delta\tau_E - \Delta\tau_{Korr} \qquad (4)$$

Erfindungsgemäß wird der Korrekturfaktor $\Delta\tau_{Korr}$ aus der Dauer der Impulsantwort eines Empfangsfilters für den Echopuls $\Delta\tau_F$ und der Pulsdauer des gesendeten Pulses $\Delta\tau_P$ gebildet und zwar als Differenz zwischen der Dauer der Impulsantwort des Empfangsfilters für den Echopuls $\Delta\tau_F$ und der Pulsdauer des gesendeten Pulses $\Delta\tau_P$ gemäß der Relation (5) berechnet:

$$\Delta\tau_{Korr} = \Delta\tau_F - \Delta\tau_P \qquad (5)$$

Bei der erfindungsgemäßen Echolaufzeitbestimmung wird mittels des Korrekturfaktors $\Delta\tau_{Korr}$ insbesondere die Wirkung einer von der Dauer des Sendepulses $\Delta\tau_P$ abweichenden Dauer der Impulsantwort des Empfangsfilters für den Echopuls $\Delta\tau_F$ derart berücksichtigt, dass die erfindungsgemäße Echolaufzeit unabhängig von der Echoamplitude bleibt. Weiterhin sind die Dauer der Impulsantwort des Empfangsfilters für den Echopuls $\Delta\tau_F$ und der Pulsdauer des gesendeten Pulses $\Delta\tau_P$ feste Systemgrößen, die beim Systemdesign einer entsprechenden Umfelderfassungsvorrichtung bestimmt werden und von der jeweiligen Objektsituation unabhängig. Daher können sie aufwandsarm berücksichtigt werden.

Bei einer besonders vorteilhaften Ausführungsform des erfindungsgemäßen Verfahrens werden bei deutlichem Überschreiten der Dauer des Überschreitens des vordefinierten Schwellwertes $\Delta\tau_E$ über eine Mindestdauer mehrere Echolaufzeiten $\tau_{O1neu}$, $\tau_{O2neu}$ bestimmt.

Mittels des erfindungsgemäßen Verfahrens wird ein Algorithmus zur Bestimmung des Reflexabstandes bereitgestellt, der kaum streut. Ferner funktioniert dieser Algorithmus auch bei Reflexpunkten, deren Echos überlagert werden. Erfindungsgemäß wird weiterhin eine Umfelderfassungsvorrichtung bereitgestellt, die diesen Algorithmus umsetzt.

Bei einer besonders vorteilhaften Ausführungsform der Erfindung umfasst die Umfelderfassungsvorrichtung einen Schwellwertschalter zur Generierung eines Schaltsignals und eine Auswerteeinheit zum Auswerten von Signalen, wobei die Umfelderfassungsvorrichtung den Schwellwertschalter derart steuert, dass der Schwellwertschalter nach dem Ablauf einer anhand des Zeitpunktes des ersten Überschreitens des Schwellwertes und der Dauer des Überschreitens des Schwellwertes berechneten Zeit, insbesondere nach dem Ablauf einer dem Zeitpunkt des ersten Überschreitens des Schwellwertes unmittelbar folgenden Zeit, die sich aus einer festen Verzögerungszeit und einer der Echopulsdauer proportionalen Verzögerungszeit zusammensetzt, einen der Echolaufzeit entsprechenden Schaltsignal generiert und an die Auswerteeinheit überträgt.

Mit anderen Worten wird bei einer erfindungsgemäßen Umfelderfassungsvorrichtung, insbesondere bei einer erfindungsgemäßen Umfelderfassungsvorrichtung mit abgesetzter Signalentscheidung, zwischen dem Schwellwertschalter und der Signalauswertung nur die Kombination des Zeitpunktes des ersten Überschreitens des Schwellwertes $t_E$ und der Dauer des Überschreitens des Schwellwertes $\Delta\tau_E$ übertragen. Insbesondere wird die Kombination des Zeitpunktes des ersten Überschreitens des Schwellwertes $t_E$ und der Dauer des Überschreitens des Schwellwertes $\Delta\tau_E$ zwischen dem Schwellwertschalter und der Signalauswertung insbesondere dadurch übertragen, dass nach dem ersten Überschreiten des Schwellwertes eine feste Verzögerungszeit sowie eine der Echopulsdauer proportionale Verzögerungszeit gewartet wird.

Erfindungsgemäß wird damit eine Umfelderfassungsvorrichtung bereitgestellt, bei der eine simple, aufwandsarme Mitteilung des Zeitpunktes des ersten Überschreitens des Schwellwertes $t_E$ und der Dauer des Überschreitens des Schwellwertes $\Delta\tau_E$ zur Korrektur der Schalllaufzeit erfolgt. Durch die simple Art, in der die Korrektur der Schalllaufzeit insbesondere mittels einer erfindungsgemäßen Umfelderfassungsvorrichtung mit abgesetzter Signalentscheidung erfolgt, herrscht zwischen der abgesetzter Signalentscheidung und Signalauswertung ein geringer Datenfluss.

Erfindungsgemäß wird weiterhin ein Fahrzeug mit einer erfindungsgemäßen Umfelderfassungsvorrichtung bereitgestellt.

Kurze Beschreibung der Zeichnungen

Nachfolgend werden Ausführungsbeispiele der Erfindung unter Bezugnahme auf die begleitende Zeichnungen im Detail beschrieben. In der Zeichnungen ist:

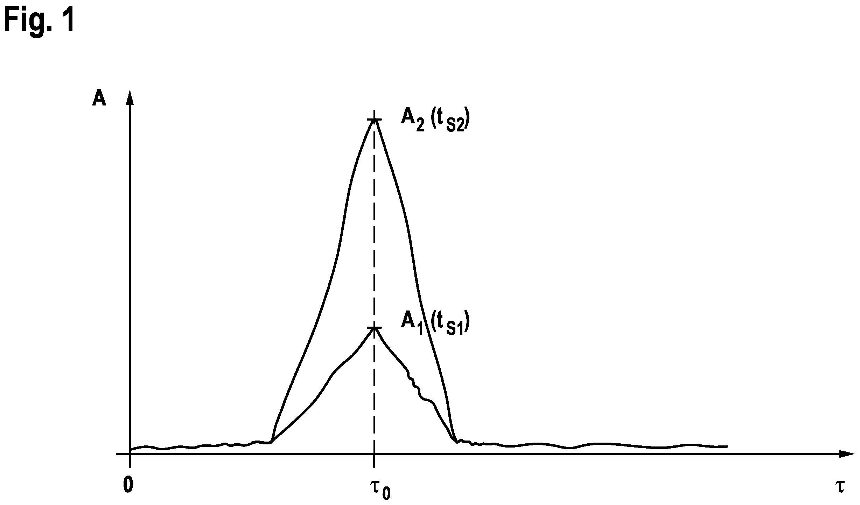

Figur 1      der Verlauf der Echoamplituden für zwei Echopulse mit einer tatsächlichen Echolaufzeit von $\tau_O$ und unterschiedlichen Echoübertragungseigenschaften zu den Zeitpunkten $t_{S1}$, $t_{S2}$ sowie einer gleichlangen Pulsdauer $\Delta\tau_P$ und einer gleichlangen Empfangsfilterimpulsdauer $\Delta\tau_F$,

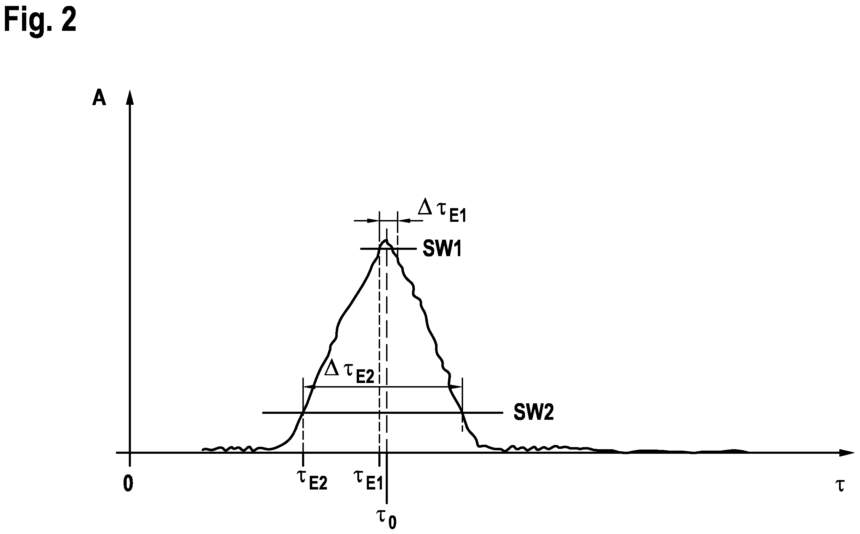

Figur 2      der Verlauf der Echoamplitude eines Echopulses bei einer tatsächlichen Echolaufzeit von $\tau_O$ sowie zwei unterschiedliche Schwellwertverläufe SW1, SW2 und die daraus resultierenden unterschiedlichen Zeitpunkte des Beginnes der Schwellwertüberschreitung $\tau_{E1}$, $\tau_{E2}$ und die entsprechenden Dauern der Schwellwertüberschreitung $\Delta\tau_{E1}$, $\Delta\tau_{E2}$,

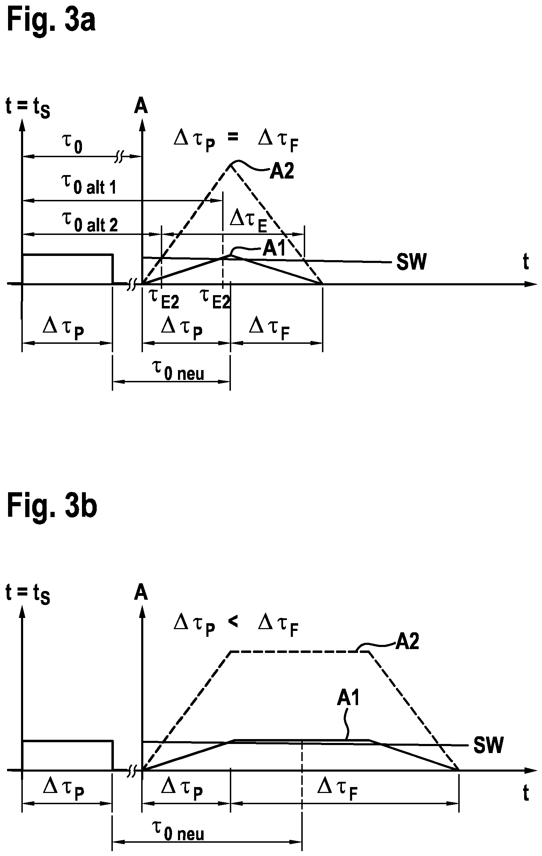

Figur 3a bis 3c      der Verlauf der Sendepulse mit gleichlangen Sendepulsdauern $\Delta\tau_P$ und der Echoamplituden nach einer tatsächlichen Echolaufzeit $\tau_O$ und unterschiedlichen Empfangsfilterimpulsantwortdauern $\Delta\tau_F$, und

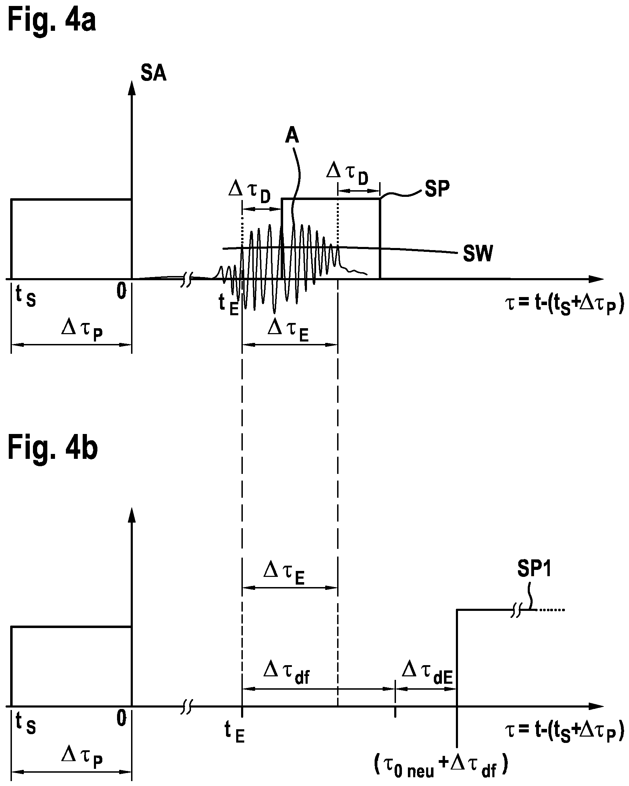

Figur 4a bis 4c      der Verlauf eines von einer aus dem Stand der Technik bekannten Umfelderfassungsvorrichtung generierten Schaltpulses in Vergleich zu einem detaillierten Verlauf eines von einer erfindungsgemäßen Umfelderfassungsvorrichtung nach einer ersten Ausführungsform der Erfindung generierten Schaltpulses, wobei die erfindungsgemäße Umfelderfassungsvorrichtung der Zeitpunkt des Beginnes der Schwellwertüberschreitung $t_E$ und die Dauer der Schwellwertüberschreitung $\Delta\tau_E$ miteinander vereint.

Ausführungsformen der Erfindung

In den Figuren 1,2, 3a, 3b und 3c ist stets nur die Einhüllende, d.h. das pulsförmige Modulationssignal des Echosignals und seine Folgen dargestellt. Durch den Verzicht auf die Darstellung des modulierten Trägersignals ist die Darstellung übersichtlicher, ohne dass die Aussagen an Gültigkeit verlieren.

In der Figur 1 ist der Verlauf der Echoamplituden für zwei Echopulse mit einer tatsächlichen Echolaufzeit von $\tau_O$ und unterschiedlichen Echoübertragungseigenschaften zu den Zeitpunkten $t_{S1}$, $t_{S2}$ sowie einer gleichlangen Pulsdauer $\Delta\tau_P$ und einer gleichlangen Empfangsfilterimpulsdauer $\Delta\tau_F$ dargestellt.

Figur 1 zeigt den Verlauf der Amplitude $A(\tau)$ mit $\tau = t - (t_S + \Delta\tau_P)$ eines mittels eines Filters empfangenen Echos eines idealer Weise punktförmig (d.h. eines nicht räumlich ausgedehnten) reflektierenden Objektes. Da in der Realität alle Übertragungskanäle eine begrenzte Bandbreite aufweisen, ist bei einem einzelnen punktförmigen Reflektor am Filterausgang stets ein stetiges Ansteigen der Echoamplitude A bis hin zu einem Echoamplitudemaximum festzustellen, bevor die Echoamplitude A irgendwann wieder abnimmt. Wie dargestellt, herrscht im Idealfall das Echoamplitudenmaximum nur für eine kurze Zeit vor, d.h., dass sie einen Peak bildet. Anderenfalls, insbesondere für räumlich ausgedehnte Reflektoren herrscht das Echoamplitudenmaximum plateauförmig über einen längeren Zeitraum vor.

Durch gründliches Studium der Theorie des optimalen Empfangs wird unter der Berücksichtigung der Sendedauer $\Delta\tau_P$ und der tatsächlichen Echolaufzeit $\tau_O$ deutlich, dass die Echoamplitude A zum Zeitpunkt $t = t_S + \Delta\tau_P + \tau_O$ ihr Maximum hat, unabhängig davon, welche momentanen Ausbreitungsdämpfungen im Übertragungsmedium gerade geherrscht haben. Die beiden unterschiedlichen maximalen Echoamplitudenwerte $A1(\tau_{S1})$, $A2(\tau_{S2})$, stellen dabei symbolisch dar, dass abhängig von den momentanen Ausbreitungsdämpfungen im Übertragungsmedium diese Maximalwerte des Echoamplitudenverlaufs unterschiedlich ausfallen können.

Figur 2 zeigt den Verlauf der Echoamplitude $A(\tau)$ mit $\tau = t - (t_S + \Delta\tau_P)$ eines Echopulses bei einer tatsächlichen Echolaufzeit von $\tau_O$ sowie zwei unterschiedliche Schwellwertverläufe SW1, SW2 und die daraus resultierenden unterschiedlichen Zeitpunkte des Beginns der Schwellwertüberschreitung $\tau_{E1}$, $\tau_{E2}$ und die entsprechenden Dauern der

Schwellwertüberschreitung $\Delta\tau_{E1}$, $\Delta\tau_{E2}$.

Mittels der Figur 2 wird der Einfluss des Verhältnisses von maximaler Echoamplitude zu Schwellwert auf den mittels des Schwellwertes festgehaltenen Beginn der Schwellüberschreitung $\tau_E$ deutlich. Je weiter der Schwellwert SW1, SW2 unter dem Maximalwert der Echoamplitude A liegt, desto größer wird die Differenz $(\tau_O - \tau_E)$. Da der Schwellwert SW1 nahe dem Maximalwert der Echoamplitude A liegt, ist die Differenz $(\tau_O - \tau_{E1})$ klein. Da der Schwellwert SW2 sehr weit unter dem Maximalwert der Echoamplitude A liegt, ist die Differenz $(\tau_O - \tau_{E2})$ relativ groß.

Da das Verhältnis von maximaler Echoamplitude zu Schwellwert von mannigfaltigen Einflüssen, wie beispielsweise von der momentanen Raumdämpfung, der Reflektivität des Objekts, usw., abhängt, wird deutlich, warum die heute übliche Objektlokalisierung basierend auf der Laufzeitbestimmung, die allein auf der Basis des Beginns $\tau_E$ oder des Endes $(\tau_E + \Delta\tau_E)$ einer Schwellwertüberschreitung durch den Zeitverlauf der Echoamplitude beruht, auch kurzfristig stark streut.

Berücksichtigt man hingegen zusätzlich die Dauer $\Delta\tau_E$ der Schwellwertüberschreitung durch den Zeitverlauf der Echoamplitude und bestimmt mittels eines insbesondere an den Sendepuls angepassten Empfangsfilter die Echolaufzeit $\tau_{Oneu}$ mittels der Relation (7), so ist das Ergebnis unabhängig von der maximalen Echoamplitude.

$$\tau_{Oneu} = \tau_E + 0{,}5 \cdot \Delta\tau_E, \text{ mit } \tau_E = t_E - (t_s + \Delta\tau_P) \qquad (7)$$

In den Figuren 3a bis 3c ist der zeitliche Verlauf der Sendepulse gleichlanger Sendepulsdauern $\Delta\tau_P$ und der Echoamplitude mit einer tatsächlichen Echolaufzeit $\tau_O$ und unterschiedlichen Empfangsfilterimpulsantwortdauern $\Delta\tau_F$ dargestellt.

Die Figuren 3a bis 3c zeigen folglich die Verläufe der Filterausgänge bei unterschiedlichen Verhältnissen von Sendepulsdauern $\Delta\tau_P$ und unterschiedlichen Empfangsfilterimpulsantwortdauern $\Delta\tau_F$ sowie bei unterschiedlichen Echoamplituden.

In den Figuren 3a bis 3c ist waagerecht jeweils die Zeit t und senkrecht die Stärke (Amplitude) A der Einhüllenden in Abhängigkeit der Zeit t darstellt. Eine senkrechte Linie kennzeichnet den gemeinsamen Zeitpunkt des Sendebeginns $t_S$. Eine weitere senkrechte Linie kennzeichnet den Zeitpunkt der Addition der Echolaufzeit $\tau_O$ zum Sendebeginn $t_S$. Mittels von Unterbrechungszeichen ⌐⌐ ist angedeutet, dass die Echolaufzeit $\tau_O$ erheblich länger als der dargestellte Zeitbereich sein kann. Vor dem Zeitpunkt $(t_s + \tau_O)$ sind in den Figuren 3a bis 3c jeweils die Zeitverläufe der stets gleichen Sendepulse mit der Pulsdauer $\Delta\tau_P$ dargestellt. Nach dem Zeitpunkt $(t_s + \tau_O)$ sind in den Figuren 3a bis 3c unterschiedliche Zeitverläufe der Filterausgangswerte dargestellt, wobei diese Filterausgangswerte für kleine Echoamplituden A1 mittels von durchgezogen Linien und für große Echoamplituden A2 mittels von gestrichelten Linien dargestellt sind. In den Figuren 3a bis 3c ist auch der Zeitverlauf eines Schwellwertes SW dargestellt.

In der Figur 3a ist der Verlauf der Echoamplituden A1, A2 für einen Empfangsfilter mit einer Impulsantwortdauer $\Delta\tau_F$, das auf die Sendepulsdauer $\Delta\tau_P$ angepasst ist, in Abhängigkeit der Zeit t dargestellt.

Die Impulsantwortdauer $\Delta\tau_F$ eines solchen angepassten Filters hat die Pulsdauer $\Delta\tau_F = \Delta\tau_P$. Wie dargestellt, ist der Verlauf der Filterausgangswerte A1, A2 für die Gesamtdauer $(\Delta\tau_P + \Delta\tau_F)$ stets ungleich Null. In der Figur 3a ist die Zeitdifferenz $\tau_{Oalt1}$ bei einer kleinen Echoamplitude A1 beziehungsweise $\tau_{Oalt2}$ beim einer großen große Echoamplitude A2 eingetragen, die der heute üblichen Form der Laufzeitbestimmung entspricht, die allein mittels des Beginns der Schwellwertüberschreitung berechnet wird. In der Figur 3a ist auch die gemäß der vorliegenden Erfindung vorgeschlagene neue Art der Laufzeitbestimmung $\tau_{Oneu} = t_E - (t_S + \Delta\tau_P) + 0{.}5 \cdot \Delta\tau_E$ dargestellt. Deutlich wird, dass das erfindungsgemäße Verfahren unabhängig von der Echopulsamplitude A1, A2 ist.

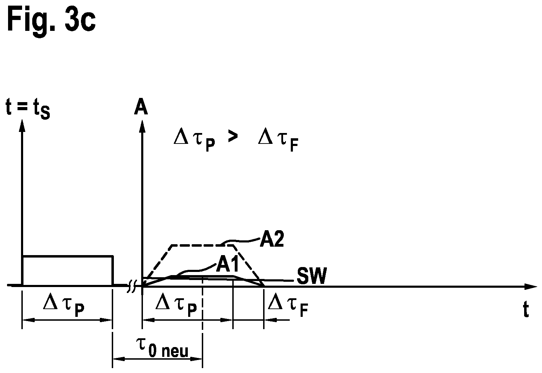

In den Figuren 3b und 3c sind die Verläufe der Echoamplituden A1, A2 für Empfangsfilter dargestellt, die nicht an die Sendepulsdauer $\Delta\tau_P$ angepasst sind. Die Impulsantwort des der Figur 3b zugrunde gelegten Filters hat eine Pulsdauer $\Delta\tau_F > \Delta\tau_P$. Wie dargestellt, ist auch hier der zeitabhängige Verlauf der Filterausgangswerte A1, A2 für die Gesamtdauer $(\Delta\tau_P + \Delta\tau_F)$ ungleich Null. Da der angeregte Echopuls mit der Pulslänge $\Delta\tau_P$ kürzer als die Filterimpulsantwortdauer $\Delta\tau_F$ ist, bricht der Anstieg der Filterantwort A1, A2 bereits nach $\Delta\tau_P$ ab und verläuft von da an für die Dauer von $(\Delta\tau_F - \Delta\tau_P)$ waagerecht, bevor die Filterantwort auf den Echopuls wieder abnimmt. Infolge der Fehlanpassung des Filters liegt der Zeitpunkt $\tau_{Oneu} = t_E - (t_S + \Delta\tau_P) + 0{.}5 \cdot \Delta\tau_E$ jedoch an einer entsprechend verschobenen Stelle, ist aber weiterhin unabhängig von der Echoamplitude. Bei geringer Fehlanpassung $|\Delta\tau_F - \Delta\tau_P| << \Delta\tau_P$ wird daher die Formel $\tau_{Oneu} = t_E - (t_S + \Delta\tau_P) + 0{.}5 \cdot \Delta\tau_E$ weiterhin zu einer zuverlässigeren Echolaufzeitschätzung als die derzeit verwendete Formel $\tau_{Oneu} = t_E - t_S$ führen.

Die Fehlanpassung kann jedoch auch korrigiert werden, indem die von Null verschiedene Gesamtdauer der Filterantwort des nicht angepassten Filters von $(\Delta\tau_P + \Delta\tau_F)$ der Gesamtdauer der Filterantwort eines angepassten Filters, die ja bekanntlich $(2 \cdot \Delta\tau_P)$ beträgt, zuzüglich eines Korrekturwertes $\Delta\tau_{Korr}$, also der korrigierten Gesamtdauer der Filterantwort eines angepassten Filters $(2 \cdot \Delta\tau_P + \Delta\tau_{Korr})$, gleich gesetzt werden, wie in der Relation (8) dargestellt wird:

$$(\Delta\tau_P + \Delta\tau_F) \equiv (2\Delta\tau_P + \Delta\tau_{Korr}) \qquad (8)$$

Aus der Relation (8) folgt dann der Ausdruck für den Korrekturwert $\Delta\tau_{Korr}$, der in der Relation (9) erläutert wird:

$$\Delta\tau_{Korr} = \Delta\tau_F - \Delta\tau_P$$
$$\tau_{Oneu} = t_E - (t_S + \Delta\tau_P) + 0.5 \cdot \Delta\tau_E + \Delta\tau_{Korr} \qquad (9)$$

Sowohl $\Delta\tau_F$ als auch $\Delta\tau_P$ sind feste Systemgrößen, die beim Systemdesign bestimmt werden und von der jeweiligen Objektsituation unabhängig sind. Daher können sie leicht Berücksichtigung finden.

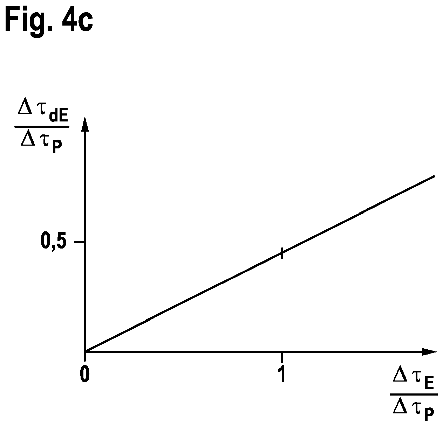

In der Figur 4a ist der Verlauf eines von einer aus dem Stand der Technik bekannten Umfelderfassungsvorrichtung generierten Schaltpulses SP in Vergleich zu einem in den Figuren 4b und 4c gezeigten detaillierten Verlauf eines von einer erfindungsgemäßen Umfelderfassungsvorrichtung nach einer ersten Ausführungsform der Erfindung generierten Schaltpulses SP1 dargestellt, wobei die erfindungsgemäße Umfelderfassungsvorrichtung der Zeitpunkt des Beginnes der *Schwellwertüberschreitung* $t_E$ und die Dauer der Schwellwertüberschreitung $\Delta\tau_P$ miteinander vereint.

Anders ausgedrückt wird in den Figuren 4a bis 4c gezeigt, wie eine Kombination des Zeitpunktes des ersten Überschreitens des Schwellwertes $t_E$ und der Dauer des Überschreitens des Schwellwertes $\Delta\tau_E$ als Schaltsignal SP1 generiert werden kann.

In der Figur 4a ist der zeitliche Verlauf des Signals SA eines empfangenen Echopulses A und eines Schaltpulses SW dargestellt. Die horizontal dargestellte Zeitachse $\tau = t - (t_S + \Delta\tau_P)$ bezieht sich auf den aus Sendebeginn $t_S$ und Sendepulsdauer $\Delta\tau_P$ gebildeten Ursprung. Mittels des dargestellten Schwellwertes SW wird bei den heuten üblichen, aus dem Stand der Technik bekannten Systemen ein Überschreiten der Echoamplitude A über einen Mindestwert festgestellt. Bei solchen Systemen wird nach dem ersten Überschreiten des Schwellwertes SW während einer folgenden Diskriminatorzeit $\Delta\tau_D$ geprüft, ob die Echoamplitude A wiederholt den Schwellwert SW überschreitet. Fand diese Überschreitung regelmäßig statt, wird nach dem Ablauf der Diskriminatorzeitdifferenz $\Delta\tau_D$ ein Schaltpuls SW gesetzt, der der Echolaufzeit entspricht und nur aus dem Beginn der Schwellwertüberschreitung $t_E$ hergeleitet wird. In Figur 4a und 4b sind der Vollständigkeit halber wie in Figur 3 vor dem zeitlichen Ursprung die Sendepulse mit der Sendepulsdauer $\Delta\tau_P$ sowie der Sendebeginn $t_S$ dargestellt, wobei in allen Fällen die Stärke der Sendepulse deutlich von der Stärke der Echoamplituden abweicht.

In der Figur 4b ist dargestellt, wie gemäß der vorliegenden Erfindung eine Umfelderfassungsvorrichtung zur Ermittlung der verbesserten Echolaufzeitbestimmung ohne großen Hardwareaufwand erzeugt werden kann. Nach dem ersten Überschreiten des Schwellwertes SW wird dabei eine feste Verzögerungszeit $\Delta\tau_{df}$ sowie nachfolgend eine weitere der Echopulsdauer proportionale Verzögerungszeit $\Delta\tau_{dE}$ gewartet, bevor ein dargestelltes Schaltsignal SP1, das der Echolaufzeit $\tau_{Oneu}$ entspricht, generiert wird. Insbesondere kann, wie bisher mittels einer Diskriminatorzeit $\Delta\tau_D$ geprüft werden, ob die Schwellwertüberschreitung länger als die Diskriminatorzeit $\tau_D$ ist und nur in diesem Fall ein der Echolaufzeit $\tau_{Oneu}$ entsprechendes Schaltsignal SP1 generiert werden. Bezieht sich der zeitlichen Nullpunkt der erfindungsgemäßen Messung gemäß der Figur 4b auf das Ende des Sendepulses, so entspricht der Zeitpunkt des Durchschaltens bei angepasster Filterung der Echolaufzeit $\tau_{Oneu}$ zuzüglich der festen Verzögerungszeit $\Delta\tau_{df}$.

In der Figur 4c ist dargestellt, wie der Echopulsdauer proportionalen Verzögerungsdauer $\Delta\tau_{dE}$ von der Echopulsdauer $\Delta\tau_E$ abhängen könnte. Ein solches Zeitverhalten lässt sich leicht insbesondere mittels von Taktteiler in Hardware realisieren.

Auf die verschiedenen Möglichkeiten der Fortführung der hier vorgestellten Generierung des erfindungsgemäßen Schaltpulses SP1 wird hier nicht detailliert eingegangen. Einerseits könnte der Schaltpuls SP1 wie bisher entsprechend der Echopulsdauer lang seinen Zustand halten oder er könnte nach einer vereinbarten festen Dauer wieder auf den Zustand, der dem Nichtvorhandensein eines Echos (hier logisch Null) entspricht, zurück gehen. Auch könnte ein aus der Kombination des Beginns und der Dauer der Schwellwertüberschreitung generiertes Signal SP1 in einem Datenstrom, wie z.B. einer Busleitung codiert übertragen werden oder in einer Zentraleinheit direkt ausgewertet werden.

Bei heutigen Systemen mit abgesetzter Signalentscheidung, bei denen sowohl der Echobeginn als auch die Echodauer übertragen werden, kann der hier offenbare Algorithmus beide Größen in der Signalverarbeitungseinheit (Auswerteeinheit) bereits berücksichtigen.

Neben der voranstehenden schriftlichen Offenbarung wird hiermit zur weiteren Offenbarung der Erfindung ergänzend auf die Darstellung in den Figuren 1 bis 4 Bezug genommen.

**Patentansprüche**

1. Verfahren zur Bestimmung der Position von mindestens einem Objekt in der Umgebung eines Bewegungshilfsmittels mittels mindestens eines ausgesendeten und an dem Objekt reflektierten akustischen Pulses, im Folgenden als Echopuls bezeichnet, mit einer vorgegebenen Pulsdauer, wobei die Echopulslaufzeit ($\tau_{Oneu}$) des Echopulses und damit auch die Position des Objektes anhand des Zeitpunktes des ersten Überschreitens ($t_E$) oder des letzten Überschreitens ($t_{EEnd}$) mindestens eines vordefinierten Schwellwertes (SW) durch die Amplitude (A) des empfangenen Echopulses und der Dauer ($\Delta\tau_E$) des Überschreitens des Schwellwertes (SW) bestimmt wird, **dadurch gekennzeichnet, dass** zur Berechnung der Echopulslaufzeit ($\tau_{Oneu}$), die Hälfte der Dauer ($\Delta\tau_E$) des Überschreitens des Schwellwertes (SW) zu dem Zeitpunkt des ersten Überschreitens ($t_E$) hinzuaddiert wird oder von dem Zeitpunkt des letzten Überschreitens ($t_{EEnd}$) subtrahiert wird, und zu dem dadurch erhaltenen Ausdruck der Echopulslaufzeit ($\tau_{Oneu}$) ein als Differenz zwischen der Dauer der Impulsantwort eines Empfangsfilters für den Echopuls ($\Delta\tau_F$) und der Pulsdauer des gesendeten Pulses ($\Delta\tau_P$) berechneter Korrekturfaktor ($\Delta\tau_{Korr}$) subtrahiert wird.

2. Verfahren nach Anspruch 1, **dadurch gekennzeichnet, dass**, zur Bestimmung der Position und/oder der Bewegung des mindestens einen Objekts, bei deutlichem Überschreiten der Dauer des Überschreitens des vordefinierten Schwellwertes ($\Delta\tau_E$) über eine Mindestdauer mehrere Echolaufzeiten ($\tau_{O1neu}$, $\tau_{O2neu}$) bestimmt werden.

3. Umfelderfassungsvorrichtung zur Bestimmung der Position von mindestens einem Objekt in der Umgebung eines Bewegungshilfsmittels mittels mindestens eines ausgesendeten und an dem Objekt reflektierten akustischen Pulses, im Folgenden als Echopuls bezeichnet, mit einer vorgegebenen Pulsdauer ($\Delta\tau_P$), wobei die Umfelderfassungsvorrichtung dazu ausgebildet ist, die Echopulslaufzeit ($\tau_{Oneu}$) und damit auch die Position des Objektes anhand des Zeitpunktes des ersten Überschreitens ($t_E$) oder des letzten Überschreitens ($t_{End}$) mindestens eines vordefinierten Schwellwertes (SW) durch die Amplitude (A) des empfangenen Echopulses und der Dauer des Überschreitens des Schwellwertes ($\Delta\tau_E$) zu bestimmen, **dadurch gekennzeichnet, dass** die Umfelderfassungsvorrichtung dazu ausgebildet ist, zur Berechnung der Echopulslaufzeit ($\tau_{Oneu}$) die Hälfte der Dauer ($\Delta\tau_E$) des Überschreitens des Schwellwertes (SW) zu dem Zeitpunkt des ersten Überschreitens ($t_E$) hinzuzuaddieren oder von dem Zeitpunkt des letzten Überschreitens ($t_{EEnd}$) zu subtrahieren, und zu dem dadurch erhaltenen Ausdruck der Echopulslaufzeit ($\tau_{Oneu}$) einen als Differenz zwischen der Dauer der Impulsantwort eines Empfangsfilters für den Echopuls ($\Delta\tau_F$) und der Pulsdauer des gesendeten Pulses ($\Delta\tau_P$) berechneten Korrekturfaktor ($\Delta\tau_{Korr}$) zu subtrahieren.

4. Umfelderfassungsvorrichtung nach Anspruch 3, **dadurch gekennzeichnet, dass** zur Bestimmung der Position und/oder der Bewegung des mindestens einen Objekts
die Umfelderfassungsvorrichtung dazu ausgebildet ist, bei Vorliegen eines deutlichen Überschreitens der Dauer des Überschreitens des vordefinierten Schwellwertes ($\Delta\tau_E$) über eine Mindestdauer mehrere Echolaufzeiten ($\tau_{O1neu}$, $\tau_{O2neu}$) zu bestimmen.

5. Umfelderfassungsvorrichtung nach einem der Ansprüche 3 oder 4, **dadurch gekennzeichnet, dass** die Umfelderfassungsvorrichtung einen Schwellwertschalter zur Generierung eines Schaltsignals (SP1) und eine Auswerteeinheit zum Auswerten von Signalen umfasst, wobei die Umfelderfassungsvorrichtung den Schwellwertschalter derart steuert, dass der Schwellwertschalter nach dem Ablauf einer anhand des Zeitpunktes des ersten Überschreitens des Schwellwertes ($t_E$) und der Dauer des Überschreitens des Schwellwertes ($\Delta\tau_E$) berechneten Zeit, insbesondere nach dem Ablauf einer dem Zeitpunkt des ersten Überschreitens des Schwellwertes ($t_E$) unmittelbar folgenden Zeit, die sich aus einer festen Verzögerungszeit ($\Delta\tau_{df}$) und einer der Echopulsdauer proportionalen Verzögerungszeit ($\Delta\tau_{dE}$) zusammensetzt, einen der Echolaufzeit entsprechenden Schaltsignal (SP1) generiert und an die Auswerteeinheit überträgt.

6. Fahrzeug mit einer Umfelderfassungsvorrichtung nach einem der Ansprüche 3 bis 5.

**Claims**

1. Method for determining the position of at least one object in the environment of a movement aid by means of at least one emitted acoustic pulse which is reflected at the object, referred to as an echo pulse below, having a predefined pulse duration, the echo pulse propagation time ($\tau_{Oneu}$) of the echo pulse and therefore also the position of the object being determined on the basis of the time at which at least one predefined threshold value (SW) is first exceeded ($t_E$) or is last exceeded ($t_{EEnd}$) by the amplitude (A) of the received echo pulse and the period ($\Delta\tau_E$) for which the threshold value (SW) is exceeded, **characterized in that**, in order to calculate the echo pulse propagation

time ($\tau_{Oneu}$), half of the period ($\Delta\tau_E$) for which the threshold value (SW) is exceeded is added to the time at which the threshold value is first exceeded ($t_E$) or is subtracted from the time at which the threshold value is last exceeded ($t_{EEnd}$), and a correction factor ($\Delta\tau_{Korr}$) calculated as the difference between the period of the pulse response of a receive filter for the echo pulse ($\Delta\tau_F$) and the pulse duration of the transmitted pulse ($\Delta\tau_P$) is subtracted from the expression of the echo pulse propagation time ($\tau_{Oneu}$) obtained thereby.

**2.** Method according to claim 1, **characterized in that**, in order to determine the position and/or the movement of the at least one object, a plurality of echo propagation times ($\tau_{O1neu}$, $\tau_{O2neu}$) are determined if the period ($\Delta\tau_E$) for which the predefined threshold value is exceeded is considerably exceeded over a minimum period.

**3.** Environment detection apparatus for determining the position of at least one object in the environment of a movement aid by means of at least one emitted acoustic pulse which is reflected at the object, referred to as an echo pulse below, having a predefined pulse duration ($\Delta\tau_P$), the environment detection apparatus being designed to determine the echo pulse propagation time ($\tau_{Oneu}$) and therefore also the position of the object on the basis of the time at which at least one predefined threshold value (SW) is first exceeded ($t_E$) or is last exceeded ($t_{EEnd}$) by the amplitude (A) of the received echo pulse and the period ($\Delta\tau_E$) for which the threshold value is exceeded, **characterized in that**, in order to calculate the echo pulse propagation time ($\tau_{Oneu}$), the environment detection apparatus is designed to add half of the period ($\Delta\tau_E$) for which the threshold value (SW) is exceeded to the time at which the threshold value is first exceeded ($t_E$) or to subtract it from the time at which the threshold value is last exceeded ($t_{EEnd}$), and to subtract a correction factor ($\Delta\tau_{Korr}$) calculated as the difference between the period of the pulse response of a receive filter for the echo pulse ($\Delta\tau_F$) and the pulse duration of the transmitted pulse ($\Delta\tau_F$) from the expression of the echo pulse propagation time ($\tau_{Oneu}$) obtained thereby.

**4.** Environment detection apparatus according to Claim 3, **characterized in that**, in order to determine the position and/or the movement of the at least one object, the environment detection apparatus is designed to determine a plurality of echo propagation times ($\tau_{O1neu}$, $\tau_{O2neu}$) if the period ($\Delta\tau_E$) for which the predefined threshold value is exceeded is considerably exceeded over a minimum period.

**5.** Environment detection apparatus according to either of Claims 3 and 4, **characterized in that** the environment detection apparatus comprises a threshold value switch for generating a switching signal (SP1) and an evaluation unit for evaluating signals, the environment detection apparatus controlling the threshold value switch in such a manner that, after the expiry of a time calculated on the basis of the time at which the threshold value is first exceeded ($t_E$) and the period ($\Delta\tau_E$) for which the threshold value is exceeded, in particular after the expiry of a time which immediately follows the time at which the threshold value is first exceeded ($t_E$) and is composed of a fixed delay time ($\Delta\tau_{df}$) and a delay time ($\Delta\tau_{dE}$) proportional to the echo pulse duration, the threshold value switch generates a switching signal (SP1) corresponding to the echo propagation time and transmits it to the evaluation unit.

**6.** Vehicle having an environment detection apparatus according to one of Claims 3 to 5.

**Revendications**

**1.** Procédé de détermination de la position d'au moins un objet situé dans l'environnement d'un moyen d'aide au déplacement au moyen d'au moins une impulsion acoustique émise et réfléchie par l'objet, désignée ci-après sous le nom d'impulsion d'écho, ayant une durée d'impulsion prédéterminée, dans lequel le temps de propagation de l'écho ($\tau_{Oneu}$) de l'impulsion d'écho, et par conséquent également, la position de l'objet, sont déterminés sur la base de l'instant du premier dépassement ($t_E$) ou du dernier dépassement ($t_{EEnd}$) d'au moins une valeur de seuil prédéfinie (SW) par l'amplitude (A) de l'impulsion d'écho reçue et de la durée ($\Delta\tau_E$) du dépassement du seuil (SW), **caractérisé en ce que**, pour calculer le temps de propagation de l'écho ($\tau_{Oneu}$), la moitié de la durée ($\Delta\tau_E$) du dépassement de la valeur de seuil (SW) est ajoutée à l'instant du premier dépassement ($t_E$) ou est soustraite à l'instant du dernier dépassement ($t_{EEnd}$), et un facteur de correction ($\Delta\tau_{Korr}$) calculé comme étant la différence entre la durée de la réponse impulsionnelle d'un filtre de réception pour l'impulsion d'écho ($\Delta\tau_F$) et la durée d'impulsion de l'impulsion émise ($\Delta\tau_P$) est soustrait à l'expression ainsi obtenue du temps de propagation de l'écho ($\tau_{Oneu}$).

**2.** Procédé selon la revendication 2, **caractérisé en ce que**, pour déterminer la position et/ou le mouvement de l'au moins un objet, lors d'un dépassement prononcé, les durées de dépassement de la valeur de seuil prédéfinie ($\Delta\tau_E$), pendant plus d'une durée minimale, de plusieurs temps de propagation d'échos ($\tau_{O1neu}$, $\tau_{O2neu}$) sont déterminées.

**3.** Dispositif de détection d'environnement destiné à déterminer la position d'au moins un objet dans l'environnement d'un moyen d'aide au déplacement au moyen d'au moins une impulsion acoustique émise et réfléchie par l'objet, désignée ci-après sous le nom d'impulsion d'écho, ayant une durée d'impulsion prédéterminée ($\Delta\tau_P$), dans lequel le dispositif de détection d'environnement est conçu pour déterminer le temps de propagation de l'écho ($\tau_{Oneu}$) et par conséquent également, la position de l'objet sur la base de l'instant du premier dépassement ($t_E$) ou du dernier dépassement ($t_{EEnd}$) d'au moins une valeur de seuil prédéfinie (SW) par l'amplitude (A) de l'impulsion d'écho reçue et de la durée du dépassement de la valeur de seuil ($\Delta\tau_E$), **caractérisé en ce que** le dispositif de détection d'environnement est conçu, pour calculer le temps de propagation de l'impulsion d'écho ($\tau_{Oneu}$), pour additionner la moitié de la durée ($\Delta\tau_e$) du dépassement de la valeur de seuil (SW) à l'instant du premier dépassement ($t_E$) ou pour la soustraire à l'instant du dernier dépassement ($t_{EEnd}$), et pour soustraire à l'expression ainsi obtenue du temps de propagation de l'impulsion d'écho ($\tau_{Oneu}$) un facteur de correction ($\Delta\tau_{Korr}$) calculé comme étant la différence entre la durée de la réponse impulsionnelle d'un filtre de réception pour l'impulsion d'écho ($\Delta\tau_F$) et la durée d'impulsion de l'impulsion émise ($\Delta\tau_P$).

**4.** Dispositif de détection d'environnement selon la revendication 3, **caractérisé en ce que**, pour déterminer la position et/ou le mouvement de l'au moins un objet, le dispositif de détection d'environnement est conçu pour déterminer, lors de la présence d'un dépassement prononcé, les durées de dépassement de la valeur de seuil prédéfinie ($\Delta\tau_E$), pendant plus d'une durée minimale, de plusieurs temps de propagation d'échos ($\tau_{O1neu}$, $\tau_{O2neu}$).

**5.** Dispositif de détection d'environnement selon l'une des revendications 3 ou 4, **caractérisé en ce que** le dispositif de détection d'environnement comprend un compteur de valeur de seuil destiné à générer un signal de commutation (SP1), et une unité d'analyse destinée à analyser des signaux, dans lequel le dispositif de détection d'environnement commande le commutateur de valeur de seuil de manière à ce que le commutateur de valeur de seuil, après écoulement d'un temps calculé sur la base de l'instant du premier dépassement de la valeur de seuil ($t_E$) et de la durée du dépassement de la valeur de seuil ($\Delta\tau_E$), notamment après écoulement d'un temps immédiatement consécutif à l'instant du premier dépassement de la valeur de seuil ($t_E$), qui se compose d'un temps de retard fixe ($\Delta\tau_{df}$) et d'un temps de retard ($\Delta\tau_{dE}$) proportionnel à la durée d'impulsion, génère un signal de commutation (SP1) correspondant au temps de propagation d'écho et le transmet à l'unité d'analyse.

**6.** Véhicule comportant un dispositif de détection d'environnement selon l'une quelconque des revendications 3 à 5.

Fig. 1

# Fig. 2

EP 2 800 983 B1

## Fig. 3a

## Fig. 3b

# Fig. 3c

$\Delta\tau_P > \Delta\tau_F$

A2

A1

SW

$t = t_S$

A

t

$\Delta\tau_P$

$\Delta\tau_P$

$\Delta\tau_F$

$\tau_{0\ neu}$

# Fig. 4a

# Fig. 4b

## Fig. 4c

**IN DER BESCHREIBUNG AUFGEFÜHRTE DOKUMENTE**

**In der Beschreibung aufgeführte Patentdokumente**

- DE 102009002870 A1
- DE 3037139 C2
- US 2011259106 A1
- WO 0212917 A2
- US 5631875 A